# EUROPEAN PATENT SPECIFICATION

(11) **EP 2 552 167 B1**
(45) Date of publication and mention of the grant of the patent: **24.07.2013**
(21) Application number: 11305995.0
(22) Date of filing: 29.07.2011
(51) Int. Cl.: H04W 72/08, H04W 84/04

(54) **Method, apparatus and computer program for a base station transceiver and for a relay station transceiver in a communication network**
Verfahren, Vorrichtung und Computerprogramm für Planung für einen mobilen Basisstations-Sender-Empfänger und für einen Relaisstations-Sender-Empfänger in einem LTE-Kommunikationsnetzwerk
Procédé, appareil et programme informatique de demande de planification pour un émetteur/récepteur mobile et pour un émetteur/récepteur de station de base dans un réseau de communications LTE

(43) Date of publication of application: 30.01.2013
(73) Proprietor: Alcatel Lucent, 75007 Paris (FR)
(72) Inventor: Stanze, Oliver, 70499 Stuttgart (DE); Braun, Volker, 70176 Stuttgart (DE)
(74) Representative: Wetzel, Emmanuelle

(56) References cited:
- EP-A1- 2 330 856
- "3rd Generation Partnership Project; Technical Specification Group Radio Access Network; Evolved Universal Terrestrial Radio Access (E-UTRA); Further advancements for E-UTRA physical layer aspects (Release 9)", 3GPP STANDARD; 3GPP TR 36.814, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 30 March 2010 (2010-03-30), pages 1-100, XP050402153, [retrieved on 2010-03-30]
- MOTOROLA: "Relay Performance Evaluation with Backhaul Subframe Dynamic Partitioning and Enhancement Techniques --- System Simulations", 3GPP DRAFT; R1-102131 - RELAY PERF EVAL W BACKHAUL SUBFRAME DYNAMIC PARTITIONING & ENHANCEMENT TECHNIQUES - SYSTEM SIMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ;, vol. RAN WG1, no. Beijing, china; 20100412, 6 April 2010 (2010-04-06), XP050419439, [retrieved on 2010-04-06]

## Description

Embodiments of the present invention relate to mobile communications, more particularly to mobile communication networks using relaying.

### Backrgound

Demands for higher data rates for mobile services are steadily increasing. At the same time, modem mobile communication systems as 3rd Generation systems (3G) and 4th Generation systems (4G) provide enhanced technologies, which enable higher spectral efficiencies and allow for higher data rates and cell capacities. As operators are seeking to extend the coverage of their networks, relaying concepts become more and more sophisticated.

In the 3rd Generation Partnership Project (3GPP) as international standardization body, relay architectures for Evolved- Universal Mobile Telecommunication System (UMTS) Terrestrial Radio Access (E-UTRA) have been discussed and results can be found, for example, in Technical Recommendation (TR) 36.806 or TR 36.814. These new architectures are likely to be established in the future for Long Term Evolution - Advanced (LTE-A) networks.

In relaying architectures a relay station transceiver may extend the coverage of a base station transceiver. Basic concepts use a relay station transceiver, which receives signals from a base station transceiver and forwards them to mobile transceivers, and vice versa, for example, as a repeater in an amplify-and-forward fashion. Other relaying concepts may receive the signals from the base station transceivers at the relay station and demodulate or decode them before they are re-encoded or re-modulated and forwarded to the mobile transceiver, and vice versa. The radio signals from the base station transceiver are received, amplified and transmitted to the mobile transceiver, from the relay station transceiver, respectively. In such a scenario the relay station may not even be identified as such by a mobile transceiver. In other concepts, the relay station transceiver may correspond to a base station transceiver, which is connected to another base station transceiver, the so-called donor base station transceiver, via a radio interface and provides radio services as a base station to the mobile transceiver station. The base station transceiver then forwards data for transmission to the relay station transceiver through backhaul signaling, which can be implemented in a wireless manner.

If a single carrier is used for access of the mobile transceivers to the base station transceivers, for accessing the relay station transceivers and for backhauling, a relay station transceiver receives backhaul traffic from the base station transceiver and transmits data to associated mobile terminals or transceivers on the same frequency. Because the relay station transceiver cannot receive and transmit on the same frequency at the same time, a Time Division Multiplexing (TDM) scheme can be applied. The available sub-frames or radio frames are separated in sub-frames for access, or A-sub-frames, and sub-frames for backhauling, or B-sub-frames. In an A-sub-frame the relay station transceiver and the donor base station transceiver transmit data to their associated mobile terminals.

The relay station transceiver does not receive any data from its donor base station transceiver in A-sub-frames. In a B-sub-frame the relay station transceiver receives backhaul traffic from its donor base station transceiver but does not transmit any data to mobile terminals or transceivers. The donor base station transceiver can use remaining resources in B-sub-frames to transmit data to associated mobile terminals or transceivers.

Document EP 2 330 856 A1 discloses a method for interference coordination of a cell with at least one neighboring cell of a radio network. The cell allows to distribute its transmit power in a spatially resolved way, the method comprising: making a resource assignment to a mobile station located in the cell; determining a measure for an interference level at the location of the mobile station based on information which is available in the cell, in particular based on feedback from the mobile station, the interference level being dependent on resource assignments in the at least one neighboring cell; and deciding whether to keep or to change the current resource assignment for the mobile station based on the measure for the interference level. A base station for implementing the method, and a radio network comprising at least one such base station are also provided.

### Summary

Embodiments are based on the finding that the interference situation for mobile terminals is different in A- and B-sub-frames, because the relay station transceiver only transmits in A-sub-frames, so in B-sub-frames there will be lower interference for mobile terminals served by the base station transceiver receiving the signals from the relay station transceiver. Embodiments can be further based on the finding that the varying interference situation can be predicted, because the base stations know which sub-frames are A-sub-frames and which are B-sub-frames. This information can be exploited for an optimized scheduling.

Moreover, embodiments can be based on the finding that the above finding may apply to other radio resources as well, for example, when the base station transceiver and the relay station transceiver transmit on different frequencies, using different scrambling codes, using different spatial precoding, using different beamforming configurations, etc.

Furthermore, embodiments can be based on the finding that knowledge about the radio resource utilized by a relay station transceiver can be exploited at a base station transceiver for different configurations of the relay station scheduler. For example, the base station transceiver can predict the radio resources utilized by the relay station transceiver, when the base station transceiver also provides the scheduling scheme for the relay station transceiver, which corresponds to the Type 2 configuration as defined by 3GPP, e.g. in TR 36.814. Moreover, the base station transceiver may predict the radio resources utilized by the relay station transceiver, when the scheduling scheme is determined by the relay station transceiver, which corresponds to the Type 1 configuration as defined by 3GPP, e.g. in TR 36.814.

It is a further finding of embodiments that the varying interference situation in A- and B-sub-frames can be exploited for an optimized scheduling of mobile terminals or transceivers, which are associated with the donor base station transceiver. For example, the mobile transceivers may be classified according to their interference condition. The mobile terminals, which are associated with the donor base station, can, for example, be classified into users, which are located close to relay station transceiver and would therefore suffer from high interference from the relay station transceiver in A-sub-frames, and into users, which are located far away from the relay station transceiver and would therefore experience the interference from the relay station transceiver in A-sub-frames as rather low.

This classification can, for example, be based on path loss measurements and thresholds, e.g. using the handover measurement reporting of LTE with report triggering as described in the 3GPP Technical Specifications (TS) as part of the Radio Resource Control (RRC), e.g. in section 5.5.4 of TS 36.331 V9.7.0, e.g. event A3.

Moreover, it is one finding of embodiments that scheduling of a mobile transceiver at a base station transceiver can be made aware of the interference condition created for the mobile transceiver by the relay station. For example, a mobile terminal or transceiver, which is served by the donor base station transceiver and which is close to a relay station transceiver can preferably be scheduled in B-sub-frames, i.e. it can be scheduled using radio resources, which the relay station does not use for transmission, because in these sub-frames or on these radio resources there will not be any interference evoked by the relay station transceiver. Accordingly, a mobile terminal or transceiver, which is far away from the relay station, can be preferably scheduled using the remaining radio resources, e.g. A-sub-frames. This can be done as long as the relay station transceiver transmits data to associated mobile terminals or transceivers. If the relay station transceiver does not have any data for transmission, the interference situation in an A-sub-frame is similar to a B-sub-frame. In other words, if it is known at the base station transceiver that the relay station transceiver is not going to transmit any data, scheduling at the base station transceiver can be carried out without considering the relay station transceiver. In this case there is no reason anymore to preferably schedule terminals which are served by the base station transceiver and which are close to a relay station transceiver in B-sub-frames. It is a further finding of embodiments that this situation can be detected by the donor base station by analyzing the DownLink (DL) transmission buffer status of the relay station transceiver.

Embodiments may provide an apparatus for a base station transceiver in a mobile communication network, i.e. embodiments may provide said apparatus to be operated by or included in a base station transceiver. In the following, said apparatus will also be referred to as base station transceiver apparatus. Moreover, the terms mobile communication network and mobile communication system will be used synonymously. The mobile communication system may, for example, correspond to one of the 3GPP-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN) an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., or mobile communication networks with different standards, e.g. Worldwide Interoperability for Microwave Access (WIMAX).

The mobile communication network comprises the base station transceiver, a relay station transceiver, and a first mobile transceiver, which is associated with the base station transceiver, i.e. the first mobile transceiver is camped on the base station transceiver. The components of the mobile communication network may be compliant to one of the above mobile communication networks. E.g. the base station transceiver may correspond to a NodeB (NB) or an Evolved-NB. In other words, the first mobile transceiver is registered with the base station transceiver and data exchange between the first mobile transceiver and the mobile communication network is carried out through the base station transceiver, i.e. the base station transceiver may also be referred to as the serving cell of the first mobile transceiver. Moreover, the mobile communication network further comprises a second mobile transceiver, which is associated with the relay station transceiver, i.e. the second mobile transceiver is camped on the relay station transceiver. In other words, the second mobile transceiver is registered with the relay station transceiver and data exchange between the second mobile transceiver and the mobile communication network is carried out through the relay station transceiver and the base station transceiver, i.e. the relay station transceiver may also be referred to as the serving cell of the second mobile transceiver.

Furthermore, the base station transceiver transmits data to the first mobile transceiver using one or more radio resources from a set of radio resources. The set of radio resources may comprise any radio resources, e.g. time resources, frequency resources, code resources, spatial resources, etc. In other words, the base station transceiver may use time frames or radio frames, frequency carriers or sub-carriers, certain codes as e.g. scrambling codes, certain spatial configurations as beamforming vectors or precoding vectors, etc. to transmit data to the relay station for the relay station to relay said data to the second mobile station. The relay station transceiver transmits data to the second mobile transceiver also using one or more radio resources from the set of radio resources.

The base station transceiver apparatus comprises means for determining an interference condition of the first mobile transceiver on a radio resource used by the relay station transceiver for transmission to the second mobile transceiver. In other words, the base station transceiver apparatus may determine the interference condition of the first mobile transceiver, for example, in a radio frame or radio subframe or on a sub-carrier, the relay station utilizes for transmission to the second mobile transceiver. The interference condition comprises information on a relation of signals received from the base station transceiver and signals received from the relay station transceiver on the radio resource by the first mobile transceiver. In other words, the interference condition may be determined in terms of a Signal-to-Interference Ratio (SIR) or a Signal-to-Interference-and-Noise Ratio (SINR) of the signals of the base station transceiver and the signals of the relay station transceiver at the first mobile transceiver on the radio resource. The interference condition may be determined by an evaluation of a path loss or an attenuation of the radio channels between the base station transceiver and the first mobile transceiver and the relay station and the first mobile transceiver, etc.

In some embodiments the interference condition can be determined by utilizing channel quality information or a channel quality indicator (CQI) reporting as it is part of the 3GPP specifications. For example, the channel quality may be determined through measurements of the first mobile transceiver on reference signals transmitted by the base station transceiver and/or by the relay station transceiver, e.g. the reference signal may correspond to pilot signals or pilot channels as part of the 3GPP specifications. In some embodiments the first mobile transceiver may determine a CQI on the signals of the base station transceiver. The first mobile transceiver may report CQI or channel quality information to the base station receiver for radio resources, which are used by the relay station transceiver for transmission to the second mobile transceiver (e.g. A-sub-frames), and the first mobile transceiver may report CQI or channel quality information for radio resources, which are not used by the relay station transceiver for transmission to the second mobile transceiver (B-sub-frames). The interference condition may then be determined by a relation of the respective CQIs or channel quality information. In some embodiments a difference between a CQI determined for a radio resource used by the relay station transceiver for transmission to the second mobile transceiver and a CQI determined for a radio resource not used by the relay station transceiver for transmission to the second mobile transceiver may be used as an indication for the degradation of the signals from the base station transceiver at the first mobile transceiver. In other words, a reporting as specified by 3GPP may be used, e.g. as for the enhanced inter-cell interference coordination (eICIC).

Furthermore, the base station transceiver apparatus comprises means for scheduling the first mobile transceiver for data transmission from the base station transceiver to the first mobile transceiver also using the radio resource used by the relay station transceiver for transmission to the second mobile transceiver, when the interference condition indicates that the signals from the base station transceiver are degraded due to interference created by the signals from the relay station transceiver on the radio resource by less than a predetermined threshold. In other words, the base station transceiver apparatus may determine the interference condition of the first mobile transceiver for the radio resource used by the relay station transceiver. If the interference condition for the first mobile transceiver indicates that on the radio resource the interference from the relay station is not severe then the base station transceiver may schedule the first mobile transceiver for transmission on the same radio resource, i.e. said radio resource may be reused. Whether the interference is severe or not can be determined by evaluating a degradation of the signals received from the base station transceiver by the first mobile transceiver due to the signals from the relay station transceiver received by the first mobile transceiver. This, for example, can be carried by evaluating a degradation of the SIR, SINR, path loss, etc. against the predetermined threshold. The predetermined threshold may be adapted to an overall load situation in the mobile communication network. In other words, the predetermination of the threshold may be carried out just before the scheduling. In some embodiments the threshold may change or may be adapted on a frequent time basis. As the threshold determines which degradation through the signals from the relay station transceiver is tolerated, in a low load condition the predetermined may be low, in a higher load condition the threshold may be set higher. In some embodiments the predetermined threshold may be determined or updated prior to any scheduling decision, e.g. on a basis of radio frame or radio sub-frames.

In embodiments the means for scheduling can be further adapted to schedule the first mobile transceiver for data transmission from the base station transceiver to the first mobile transceiver on a radio resource different from the radio resource for which the interference condition was determined, when the interference condition indicates that the signals from the base station transceiver are degraded due to interference created by the signals from the relay station transceiver on the radio resource by more than another predetermined threshold. The other predetermined threshold can be different from the predetermined threshold. For the predetermination of the other predetermined threshold, the same considerations apply as given above for the predetermined threshold. In this case, a radio resource from the set of radio resources may be selected for transmission from the base station transceiver to the first mobile transceiver on which data transmission from the relay station transceiver to the second mobile transceiver is suspended.

In other words, the base station transceiver apparatus may determine the interference condition of the first mobile transceiver for the radio resource used by the relay station transceiver. If the interference condition for the first mobile transceiver indicates that on the radio resource the interference from the relay station is severe then the base station transceiver may schedule the first mobile transceiver for transmission on a different radio resource, i.e. on a radio resource for which the interference condition is not severe, e.g. because the data transmission from the relay station transceiver is suspended for the different radio resource.

The base station transceiver may transmit data to the relay station transceiver using a radio resource from the set of radio resources and the means for scheduling can be adapted to schedule the first mobile transceiver for data transmission from the base station transceiver to the first mobile transceiver on a radio resource on which the transmission from the base station transceiver to the relay station transceiver is suspended, when the interference condition indicates that the signals from the base station transceiver are degraded due to interference created by the signals from the relay station transceiver at the first mobile transceiver on the radio resource by less than the predetermined threshold. In other words, in a scenario, wherein there is a sharing of the radio resources between access transmissions and backhauling transmissions, as e.g. with A-sub-frames and B-sub-frames, the base station transceiver may schedule the first mobile transceiver for transmission during an A-sub-frame, when the interference condition indicates that the interference from the relay station transceiver is not severe.

The base station transceiver may transmit data to the relay station transceiver using a radio resource from the set of radio resources and the means for scheduling can be adapted to schedule the first mobile transceiver for data transmission from the base station transceiver to the first mobile transceiver on a radio resource on which the base station transceiver transmits data to the relay station transceiver, when the interference condition indicates that the signals from the base station transceiver are degraded due to interference created by the signals from the relay station transceiver at the first mobile transceiver on the radio resource by more than the other predetermined threshold. In other words, in a scenario, wherein there is a sharing of the radio resources between access transmissions and backhauling transmission, as e.g. with A-sub-frames and B-sub-frames, the base station transceiver may schedule the first mobile transceiver for transmission on a backhauling radio resource, e.g. during a B-sub-frame, when the interference condition indicates that the interference from the relay station transceiver in A-subframes is severe. In this case, the base station transceiver would know that the relay station transceiver does not transmit on the backhauling resources, therefore the base station transceiver may schedule the first mobile transceiver on a backhauling resource, while said backhauling resource may not be fully exploited for backhauling.

In some embodiments the base station transceiver and the relay station transceiver use the same carrier frequency for data transmission to the first and the second mobile transceiver. The base station transceiver may use the carrier frequency for data transmission to the relay station transceiver and the set of radio resources may correspond to repetitive radio frames, i.e. to time resources. The base station transceiver may transmit data intermittently to the first mobile transceiver using the repetitive radio frames as radio resources and the relay station transceiver may transmit data intermittently to the second mobile transceiver using the repetitive radio frames as radio resources. The base station transceiver may transmit data intermittently to the relay station transceiver using the repetitive radio frames as radio resources.

In embodiments the means for determining the interference condition can be adapted to receive information on measured signals received from the base station transceiver at the first mobile transceiver and information on measured signals received from the relay station transceiver at the first mobile transceiver. The interference condition can be determined based on the information on the measured signals. In other words, the first mobile transceiver may be configured to take measurements on the one or more radio resources and to report information on said measurements to the base station transceiver. In some embodiments, measurements according to the 3GPP specifications may be configured, e.g. as part of RRC, e.g.in section 5.5.4 of TS 36.331 V9.7.0, e.g. event A3. The information on the measured signals may comprise information on a path loss between the base station transceiver and the first mobile station transceiver and/or information on a path loss between the relay station transceiver and the first mobile transceiver. In some embodiments the means for determining the interference condition can be adapted to classify the mobile transceiver as either being close to the relay station transceiver or as being far away from the relay station transceiver, for example based on the respective path losses.

Moreover, in embodiments the means for determining can be further adapted to determine the interference condition indicating that the signals from the base station transceiver are degraded due to interference created by the signals from the relay station transceiver by less than a predetermined threshold by evaluating a data buffer status of the relay station transceiver. In other words, the base station transceiver apparatus may determine a transmission buffer status of the relay station transceiver and if the transmission buffers of the relay station transceiver are empty then the relay station transceiver may not transmit and may not generate interference. Therefore, the base station transceiver apparatus may determine the interference condition as non-severe. In other words, in these embodiments the means for determining can be further adapted to determine the interference condition indicating that the signals from the base station transceiver are degraded due to interference created by the signals from the relay station transceiver by less than a predetermined threshold for radio resources on which data is transmitted from the base station transceiver to the relay station transceiver, making use of the knowledge that the relay station transceiver cannot transmit and receive simultaneously.

Furthermore, embodiment can provide an apparatus for a relay station transceiver in a mobile communication network, i.e. embodiments may provide said apparatus to be operated by or included in a relay station transceiver. In the following said apparatus will also be referred to as relay station transceiver apparatus. The mobile communication network may correspond to one of the above mobile communications networks. The mobile communication network comprises the base station transceiver and the relay station transceiver and the base station transceiver transmits data to the relay station transceiver using a radio resource from a set of radio resources.

The relay station transceiver apparatus comprises means for buffering data transmitted from the base station transceiver to the relay station transceiver and means for generating information on a buffer status. Moreover, the relay station transceiver apparatus comprises means for communicating the information on the buffer status to the base station transceiver for enabling interference condition determination at the base station transceiver. In other words, according to the above embodiments of the base station receiver apparatus the relay station transceiver apparatus is adapted to enable a reporting on its buffer states to enable the base station transceiver apparatus to determine a non-severe interference condition, when the buffers of the relay station are empty.

The means for communicating can be adapted to compose a message comprising the information on the buffer status. In line with what was described above for embodiments of the base station transceiver apparatus, the base station transceiver and the relay station transceiver may use the same carrier frequency for data transmission to the first and the second mobile transceiver. The set of radio resources can correspond to repetitive radio frames. The base station transceiver may transmit data intermittently to the first mobile transceiver using the repetitive radio frames as radio resources and the relay station transceiver may transmit data intermittently to the second mobile transceiver using the repetitive radio frames as radio resources. The base station transceiver may transmit data intermittently to the relay station transceiver using the repetitive radio frames as radio resources.

In embodiments the information on the buffer status may comprise a single bit indicating whether the buffer is empty. In other embodiments the information on the buffer status may comprises a plurality of bits, e.g. indicating a buffer filling state.

Embodiments may further provide a method for a base station transceiver in a mobile communication network. The mobile communication network comprising the base station transceiver, the relay station transceiver, the first mobile transceiver, which is associated with the base station transceiver, and the second mobile transceiver, which is associated with the relay station transceiver. The base station transceiver transmits data to the first mobile transceiver using one or more radio resources from a set of radio resources and the relay station transceiver transmits data to the second mobile transceiver also using one or more radio resources from the set of radio resources. The method comprises a step of determining an interference condition of the first mobile transceiver on a radio resource used by the relay station transceiver for transmission to the second mobile transceiver, the interference condition comprises information on a relation of signals received from the base station transceiver and signals received from the relay station transceiver on the radio resource by the first mobile transceiver. The method comprises a further step of scheduling the first mobile transceiver for data transmission from the base station transceiver to the first mobile transceiver also using the radio resource used by the relay station transceiver for transmission to the second mobile transceiver, when the interference condition indicates that the signals from the base station transceiver are degraded due to interference created by the signals from the relay station transceiver on the radio resource by less than a predetermined threshold.

Embodiments may also provide a method for a relay station transceiver in a mobile communication network. The mobile communication network comprises a base station transceiver and the relay station transceiver. The base station transceiver transmits data to the relay station transceiver using a radio resource from a set of radio resources. The method comprises a step of buffering data transmitted from the base station transceiver to the relay station transceiver and a step of generating information on a buffer status. The method further comprises a step of communicating the information on the buffer status to the base station transceiver for enabling interference condition determination at the base station transceiver.

Embodiments may further provide a computer program having a program code for performing one of the above methods, when the computer program is executed on a computer or processor.

Embodiments may enhance the performance of cellular networks or mobile communication networks with in-band relays, e.g. the throughput may be increased. Embodiments may further enable a combination of scheduling and inter-cell interference-coordination (ICIC) schemes, e.g. with inverted reuse.

### Brief description of the Figures

Some other features or aspects will be described using the following non-limiting embodiments of apparatuses and/or methods and/or computer programs by way of example only, and with reference to the accompanying figures, in which
Figure 1 shows an embodiment of an apparatus for a base station transceiver;
Figure 2 illustrates a mobile communication network;
Figure 3 shows a sequence chart to illustrate scheduling in embodiments;
Figure 4 illustrates an embodiment of an apparatus for a relay station transceiver;
Figure 5 shows a block diagram of an embodiment of a method for a base station transceiver; and
Figure 6 shows a block diagram of an embodiment of a method for a relay station transceiver.

### Description of some Embodiments

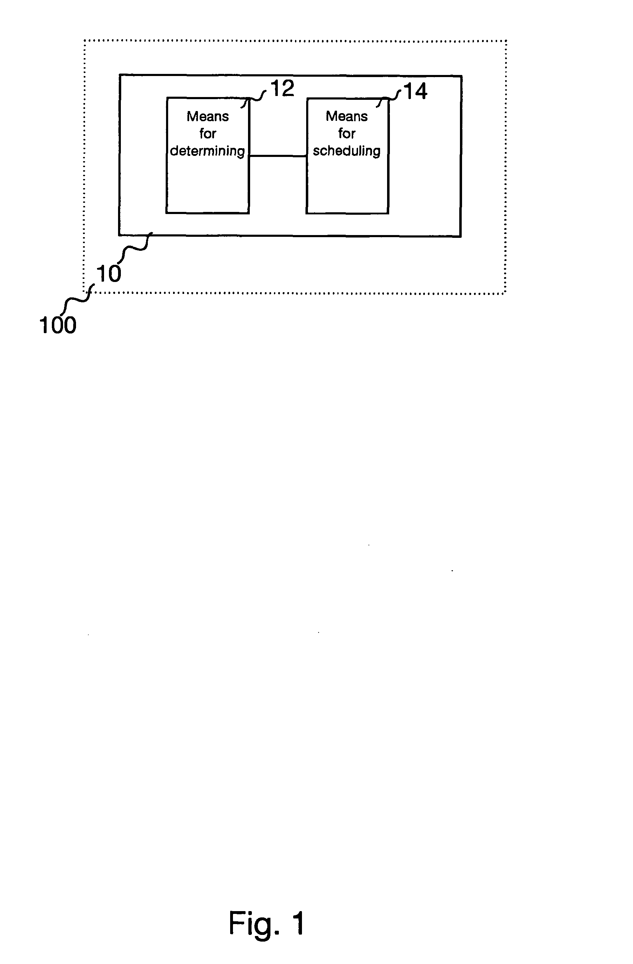

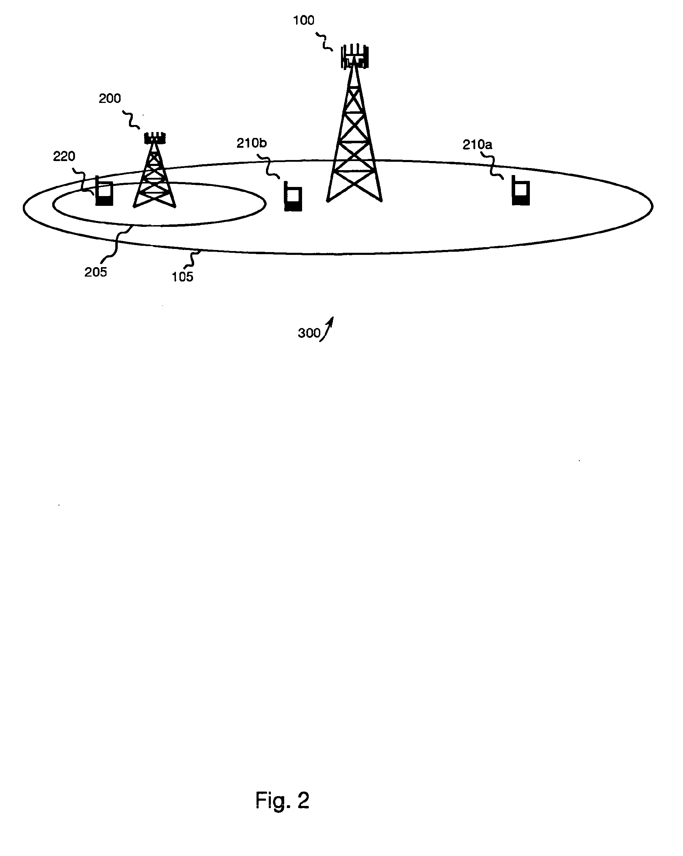

In the following, optional components are shown in dotted lines in the Figures. Figure 1 shows an embodiment of an apparatus 10 for a base station transceiver 100. The base station transceiver apparatus 10 comprises means for determining 12 and means for scheduling 14. Figure 2 illustrates a mobile communication network 300. The mobile communication network 300 comprises the base station transceiver 100, a relay station transceiver 200 and a first mobile transceiver 210, which is associated with the base station transceiver 100. The first mobile transceiver is shown at two different positions which are differentiated by 210a and 210b. It is assumed that at position 210a the first mobile transceiver 210 does not experience severe interference from the relay station transceiver 200 and that at position 210b the first mobile transceiver 210 does experience severe interference from the relay station transceiver. Moreover, Figure 2 shows the coverage area 105 of the base station transceiver 100 and the coverage area 205 of the relay station transceiver 200. Furthermore, a second mobile transceiver 220 is depicted, which is associated with the relay station transceiver 200. Furthermore, it is assumed that the base station transceiver 100 transmits data to the first mobile transceiver 210 using one or more radio resources from a set of radio resources and that the relay station transceiver 200 transmits data to the second mobile transceiver 220 also using one or more radio resources from the set of radio resources. In the following embodiment, the radio resources may correspond to time resources in terms of radio frames and frequency resources in terms of a frequency carrier.

According to Figure 2 the relay station transceiver 200 is located inside the coverage area 105 of the donor base station transceiver 100. The first mobile transceiver or terminal 210 is shown at two locations 210a and 210b. The first mobile transceiver 210 is located inside the coverage area 105 of the donor base station transceiver 100 at both positions 210a and 210b. At position 210b the first mobile transceiver 210 is also located close to the coverage area 205 of the relay station transceiver 200. The second mobile terminal or receiver 220 is located inside the coverage area 205 of the relay station transceiver 200 and will be served by the relay station transceiver 200. The relay station transceiver 200 is assumed to be an in-band relay station transceiver 200, i.e. the donor base station transceiver 100 and the relay station transceiver 200 are using the same carrier for the access to the mobile terminals 210, 220 and the donor base station transceiver 100 is also using this carrier frequency for the backhauling to the relay station transceiver 200. Because the relay station transceiver 200 cannot transmit and receive data at the same time it has to apply a time division multiplexing (TDM) scheme.

In Figure 1 it is shown that the embodiment of the apparatus 10 comprises means for determining 12 an interference condition of the first mobile transceiver 210 on a radio resource used by the relay station transceiver 200 for transmission to the second mobile transceiver 220, the interference condition comprising information on a relation of signals received from the base station transceiver 100 and signals received from the relay station transceiver 200 on the radio resource by the first mobile transceiver 210. The apparatus 10 further comprises means for scheduling 14 the first mobile transceiver 210 for data transmission from the base station transceiver 100 to the first mobile transceiver 210 also using the radio resource used by the relay station transceiver 200 for transmission to the second mobile transceiver 220, when the interference condition indicates that the signals from the base station transceiver 100 are degraded due to interference created by the signals from the relay station transceiver 200 on the radio resource by less than a predetermined threshold, as indicated by the first mobile transceiver 210a in Figure 2.

The means for scheduling 14 can be further adapted to schedule the first mobile transceiver 210 for data transmission from the base station transceiver 100 to the first mobile transceiver 210 on a radio resource different from the radio resource for which interference condition was determined, when the interference condition indicates that the signals from the base station transceiver 100 are degraded due to interference created by the signals from the relay station transceiver 200 on the radio resource by more than another predetermined threshold, as illustrated by the first mobile transceiver 210b in Figure 2.

In line with Figure 2, in this embodiment the base station transceiver 100 and the relay station transceiver 200 use the same carrier frequency for data transmission to the first and the second mobile transceiver 210, 220. The base station transceiver 100 also uses the carrier frequency for data transmission to the relay station transceiver 200. In this embodiment the set of radio resources corresponds to repetitive radio frames on said carrier frequency. The base station transceiver 100 transmits data intermittently to the first mobile transceiver 210 using the repetitive radio frames as radio resources, the relay station transceiver 200 transmits data intermittently to the second mobile transceiver 220 using the repetitive radio frames as radio resources, and the base station transceiver 100 transmits data intermittently to the relay station transceiver 200 using the repetitive radio frames as radio resources. In other words, the base station transceiver 100 may use B-sub-frames to transmit data to the relay station transceiver 200, and both may use A-sub-frames to transmit data to their associated mobile transceivers 210, 220. The relay station transceiver 200 cannot transmit and receive at the same time, i.e. the relay station transceiver 200 does not transmit in B-sub-frames.

In other words, in the embodiment the base station transceiver 100 transmits data to the relay station transceiver 200 also using a radio resource from the set of radio resources. The means 14 for scheduling can be adapted to schedule the first mobile transceiver 210 for data transmission from the base station transceiver 100 to the first mobile transceiver 210 on a radio resource (A-sub-frame) on which the transmission from the base station transceiver 100 to the relay station transceiver 200 is suspended, when the interference condition indicates that the signals from the base station transceiver 100 are degraded due to interference created by the signals from the relay station transceiver 200 at the first mobile transceiver 210 on the radio resource by less than the predetermined threshold, as indicated by the first mobile transceiver 210a in Figure 2.

The means for scheduling 14 can be adapted to schedule the first mobile transceiver 210 for data transmission from the base station transceiver 100 to the first mobile transceiver 210 on a radio resource on which the base station transceiver 100 transmits data to the relay station transceiver 200 (B-sub-frame), when the interference condition indicates that the signals from the base station transceiver 200 are degraded due to interference created by the signals from the relay station transceiver 200 at the first mobile transceiver 210 on the radio resource by more than another predetermined threshold, as indicated by the first mobile transceiver 210b in Figure 2.

In the embodiment, in a first step the base station transceiver may classify the first mobile transceiver 210 as a terminal, which is close to a relay station transceiver 200, e.g. when it is at location 210b or as a terminal which is far away from any relay station transceiver 200 in case of location 210a. In other words, in the embodiment the means for determining 12 the interference condition is adapted to classify the first mobile transceiver 210 as either being close (compare 210b in Figure 2) to the relay station transceiver 200 or as being far away (compare 210a in Figure 2) from the relay station transceiver 200. E.g. this classification can be done on basis of path loss measurements of the mobile terminals 210 on the relay station transceiver 200. Thus, the means for determining 12 the interference condition is adapted to receive information on measured signals received at the first mobile transceiver 210 from the base station transceiver 100 and information on measured signals received at the first mobile transceiver 210 from the relay station transceiver 200. The interference condition can then be determined based on the information on the measured signals.

In the embodiment depicted in Figure 2 the donor base station 100 knows which sub-frames are A-sub-frames or B-sub-frames. In the following the donor base station 100 will preferably schedule the first mobile transceiver 210 to a B-sub-frame, when it is at location 210b. It will schedule the first mobile transceiver 210 to an A-sub-frame when it is at location 210a. The means for determining 12 can be further adapted to determine the interference condition indicating that the signals from the base station transceiver 100 are degraded due to interference created by the signals from the relay station transceiver 200 by less than a predetermined threshold for a radio frame in which data is transmitted from the base station transceiver 100 to the relay station transceiver 200. In other words the means for determining 12 may take into account that the relay station transceiver 200 is known to not transmit during B-sub-frames.

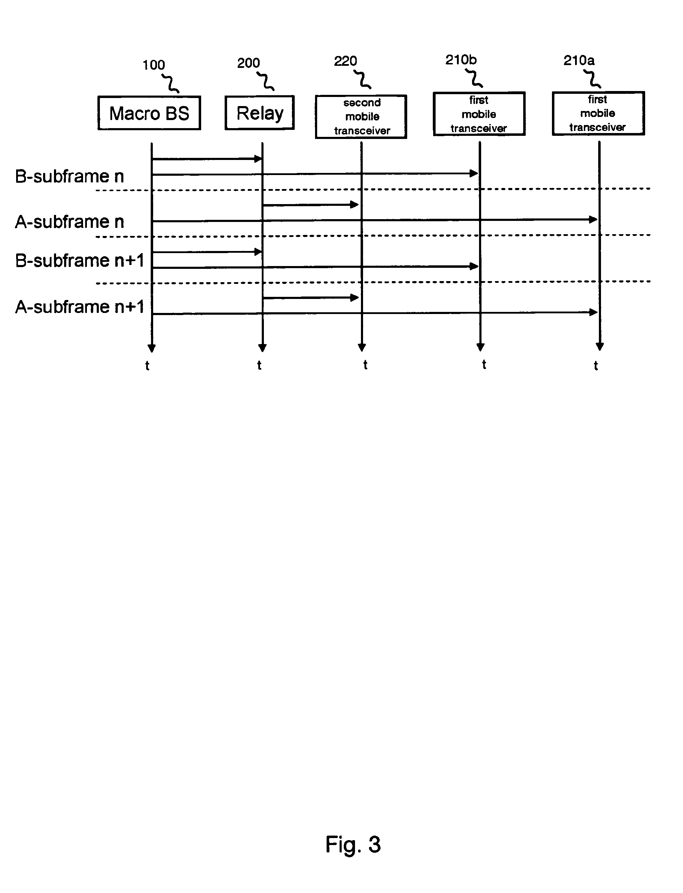

Figure 3 shows a sequence chart to illustrate scheduling in embodiments. Figure 3 shows a sequence of transmissions between the same entities as illustrated in Figure 2. Figure 3 shows the base station transceiver 100, which is also labeled as "Macro BS", the relay station transceiver 200, the second mobile transceiver 220, and the first mobile transceiver 210 at location 210b and at location 210a. Time is illustrated in Figure 3 from the top to the bottom showing repetitive radio frames further subdivided in A-sub-frames and B-sub-frames. Figure 3 shows two radio frames "n" and "n+1" and correspondingly two -A-sub-h-frames "n" and " n+1", two B-sub-frames "n" and "n+1", respectively. In Figure 3 the arrows symbolize transmissions. It can be seen that the base station transceiver 100 transmits data to the relay station transceiver 200 and to the first mobile transceiver 210 at location 210b during B-sub-frame n, i.e. when transmission between the relay station transceiver 200 and the second mobile transceiver 220 is suspended. During A-sub-frame n the base station transceiver 100 transmits data to the first mobile transceiver when at location 210a, at the same time the relay station transceiver 200 transmits data to the second mobile transceiver 220, as the interference created by the relay station transceiver 200 is not severe, when the first mobile transceiver is located at 210a. As further indicated in Figure 3 the same transmission pattern repeats in the next radio frame n+1.

In the embodiment, the interference aware scheduling, i.e. the scheduling based on the interference condition of the first mobile transceiver 210, is applied as long the relay station transceiver 200 has to transmit any data to the second mobile transceiver 220. If the relay station transceiver 200 does not have any data to transmit, the interference aware scheduling can be suspended by the donor base station 100, i.e. the first mobile terminal 210 at location 210b can be scheduled both in A and B sub-frames. Therefore, the donor base station 100 may analyze buffer status information of the relay station transceiver 200. Hence, the means for determining 12 is further adapted to determine the interference condition indicating that the signals from the base station transceiver 100 are degraded due to interference created by the signals from the relay station transceiver 200 by less than a predetermined threshold by evaluating a data buffer status of the relay station transceiver 200.

If the scheduling for the relay station transceiver 200 is done in the donor base station 100, e.g. in case of LTE type 2 relays, the buffer status information is at least roughly available for the donor base station 100. If the relay 200 has a resource scheduler, e.g. in case of LTE type 1 relays, the relay station 200 may inform the donor base station 100 about its buffer status.

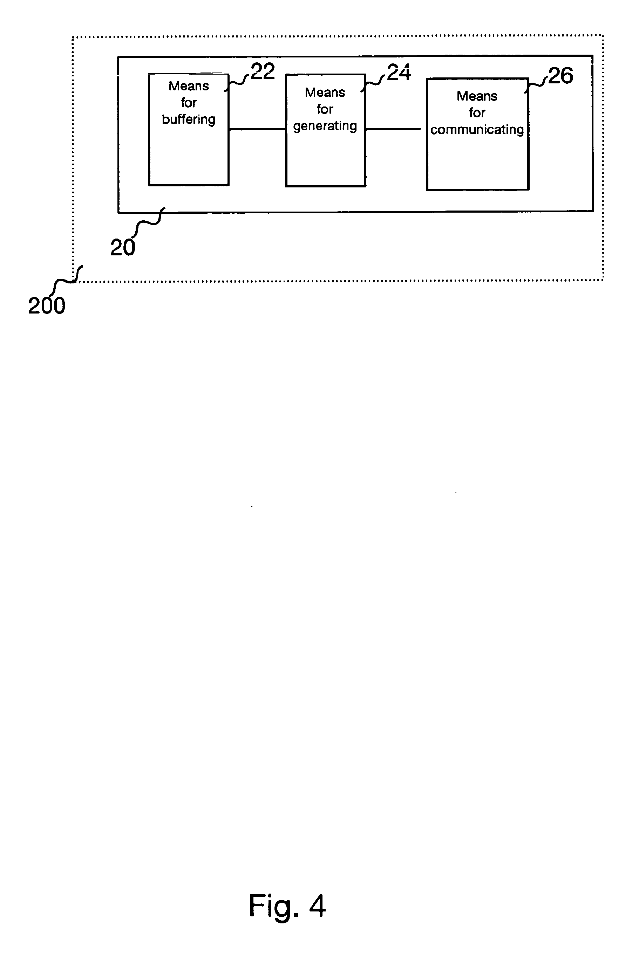

Figure 4 illustrates an embodiment of an apparatus 20 for a relay station transceiver 200 in a mobile communication network 300. The mobile communication network 300 comprises, as shown in Figure 2, the base station transceiver 100 and the relay station transceiver 200. The base station transceiver 100 transmits data to the relay station transceiver 200 using a radio resource from a set of radio resources. In line with Figure 4, the relay station transceiver apparatus 20 comprises means for buffering 22 data transmitted from the base station transceiver 100 to the relay station transceiver 200 and means for generating 24 information on a buffer status. The relay station transceiver apparatus 20 further comprises means for communicating 26 the information on the buffer status to the base station transceiver 100 for enabling interference condition determination at the base station transceiver 100.

In the embodiment a corresponding signaling message is used to communicate the buffer status. The means for communicating 26 is adapted to compose a message comprising the information on the buffer status.

In line with the above description the base station transceiver 100 and the relay station transceiver 200 use the same carrier frequency for data transmission to the first and second mobile transceivers 210, 220. The set of radio resources corresponds to repetitive radio frames, wherein the base station transceiver 100 transmits data intermittently to the first mobile transceiver 210 using the repetitive radio frames as radio resources, wherein the relay station transceiver 200 transmits data intermittently to the second mobile transceiver 220 using the repetitive radio frames as radio resources, and wherein the base station transceiver 100 transmits data intermittently to the relay station transceiver 200 using the repetitive radio frames as radio resources.

The content of the buffer status reporting can be as minimal as a single bit indicating only an empty/non-empty buffer. Thus, the information on the buffer status comprises a single bit indicating whether the buffer is empty or the information on the buffer status comprises a plurality of bits, e.g. indicating a buffer filling state. The buffer status report could also include further information, e.g. the aggregated buffer filling state, which could also be reported repeatedly.

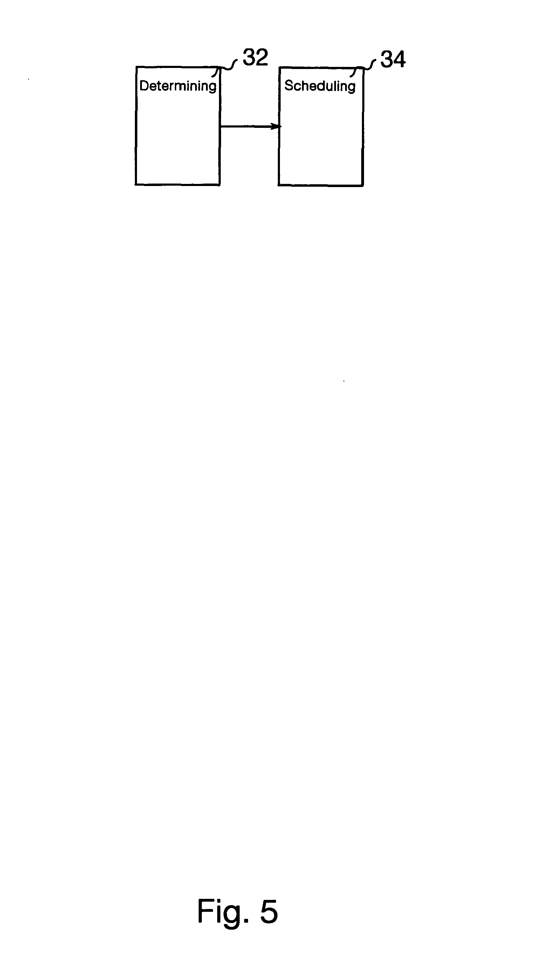

Figure 5 shows a block diagram of an embodiment of a method for a base station transceiver 100 in a mobile communication network 300 in line with Figure 2. The mobile communication network 300 comprises the base station transceiver 100, the relay station transceiver 200, the first mobile transceiver 210, which is associated with the base station transceiver 100, and the second mobile transceiver 220, which is associated with the relay station transceiver 200. The base station transceiver 100 transmits data to the first mobile transceiver 210 using one or more radio resources from a set of radio resources, the relay station transceiver 200 transmits data to the second mobile transceiver 220 also using one or more radio resources from the set of radio resources. The method comprises a step of determining 32 an interference condition of the first mobile transceiver 210 on a radio resource used by the relay station transceiver 200 for transmission to the second mobile transceiver 220. The interference condition comprises information on a relation of signals received from the base station transceiver 100 and signals received from the relay station transceiver 200 on the radio resource by the first mobile transceiver 210. The method further comprises a step of scheduling 34 the first mobile transceiver 210 for data transmission from the base station transceiver 100 to the first mobile transceiver 210 also using the radio resource used by the relay station transceiver 200 for transmission to the second mobile transceiver 220, when the interference condition indicates that the signals from the base station transceiver 100 are degraded due to interference created by the signals from the relay station transceiver 200 on the radio resource by less than a predetermined threshold.

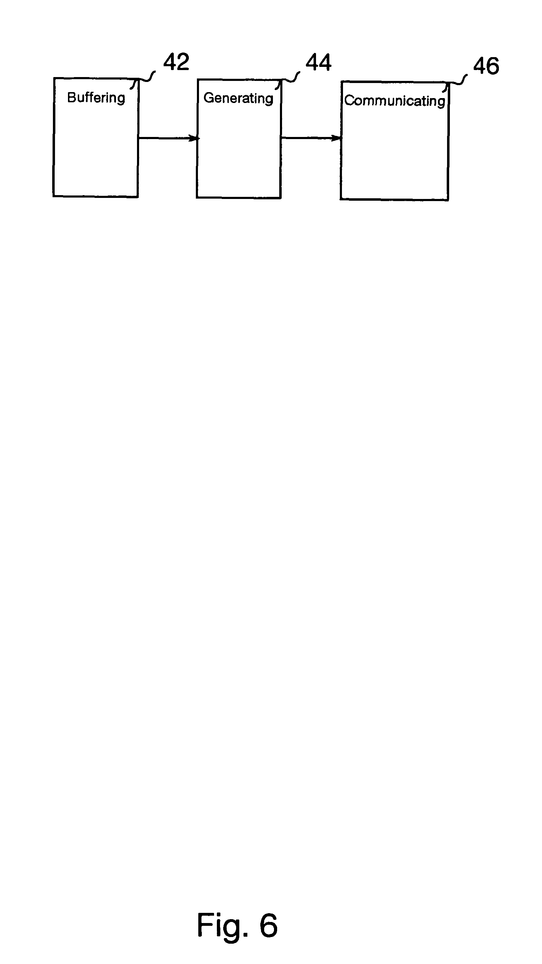

Figure 6 shows a block diagram of an embodiment of a method for a relay station transceiver 200 in a mobile communication network 300. The mobile communication network 300 comprises the base station transceiver 100 and the relay station transceiver 200. The base station transceiver 100 transmits data to the relay station transceiver 200 using a radio resource from a set of radio resources. The method comprises a step of buffering 42 data transmitted from the base station transceiver 100 to the relay station transceiver 200 and a step of generating 44 information on a buffer status. The method further comprises a step of communicating 46 the information on the buffer status to the base station transceiver 100 for enabling interference condition determination at the base station transceiver 100.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in un-derstanding the principles of the invention and the concepts contributed by the inventor(s) to furthering the art, and are to be construed as being without limitation to such specifically recited examples and conditions. Moreover, all statements herein reciting principles, as-pects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for scheduling", "means for buffering", "means for generating", "means for communicating", etc., may be provided through the use of dedicated hardware, such as "a determiner", "a scheduler" "a buffer", "a generator", "a communicator", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a base station transceiver (100) in a mobile communication network (300), the mobile communication network (300) comprising the base station transceiver (100), a relay station transceiver (200), a first mobile transceiver (210), which is associated with the base station transceiver (100), and a second mobile transceiver (220), which is associated with the relay station transceiver (200), the relay station transceiver (200) being located in a coverage area of the base station transceiver (100), the base station transceiver (100) transmitting data to the first mobile transceiver (210) using one or more radio resources from a set of radio resources, the relay station transceiver (200) transmitting data to the second mobile transceiver (220) also using one or more radio resources from the set of radio resources, the apparatus (10) comprising
means for determining (12) an interference condition of the first mobile transceiver (210) on a radio resource used by the relay station transceiver (200) for transmission to the second mobile transceiver (220), the interference condition comprising information on a relation of signals received from the base station transceiver (100) and signals received from the relay station transceiver (200) on the radio resource by the first mobile transceiver (210); and
means for scheduling (14) the first mobile transceiver (210) for data transmission from the base station transceiver (100) to the first mobile transceiver (210) also using the radio resource used by the relay station transceiver (200) for transmission to the second mobile transceiver (220), when the interference condition indicates that the signals from the base station transceiver (100) are degraded due to interference created by the signals from the relay station transceiver (200) on the radio resource by less than a predetermined thresho ld.

2. The apparatus (10) of claim 1, wherein the means for scheduling (14) is further adapted to schedule the first mobile transceiver (210) for data transmission from the base station transceiver (100) to the first mobile transceiver (210) on a radio resource different from the radio resource for which the interference condition was determined, when the interference condition indicates that the signals from the base station transceiver (100) are degraded due to interference created by the signals from the relay station transceiver (200) on the radio resource by more than another predetermined threshold.

3. The apparatus (10) of claim 1, wherein the base station transceiver (100) transmits data to the relay station transceiver (200) using a radio resource from the set of radio resources, and wherein the means (14) for scheduling is adapted to schedule the first mobile transceiver (210) for data transmission from the base station transceiver (100) to the first mobile transceiver (210) on a radio resource on which the transmission from the base station transceiver (100) to the relay station transceiver (200) is suspended, when the interference condition indicates that the signals from the base station transceiver (100) are degraded due to interference created by the signals from the relay station transceiver (200) at the first mobile transceiver (210) on the radio resource by less than the predetermined thresho ld.

4. The apparatus of claim 1, wherein the base station transceiver (100) transmits data to the relay station transceiver (200) using a radio resource from the set of radio resources, and wherein the means for scheduling (14) is adapted to schedule the first mobile transceiver (210) for data transmission from the base station transceiver (100) to the first mobile transceiver (210) on a radio resource on which the base station transceiver (100) transmits data to the relay station transceiver (200), when the interference condition indicates that the signals from the base station transceiver (100) are degraded due to interference created by the signals from the relay station transceiver (200) at the first mobile transceiver (210) on the radio resource by more than another predetermined threshold.

5. The apparatus of claim 1, wherein the base station transceiver (100) and the relay station transceiver (200) use the same carrier frequency for data transmission to the first and the second mobile transceiver (210, 220) and/or wherein the base station transceiver (100) uses the carrier frequency for data transmission to the relay station transceiver (200) and/or wherein the set of radio resources corresponds to repetitive radio frames, wherein the base station transceiver (100) transmits data intermittently to the first mobile transceiver (210) using the repetitive radio frames as radio resources, wherein the relay station transceiver (200) transmits data intermittently to the second mobile transceiver (220) using the repetitive radio frames as radio resources, and wherein the base station transceiver (100) transmits data intermittently to the relay station transceiver (200) using the repetitive radio frames as radio resources.

6. The apparatus of claim 1, wherein the means for determining (12) the interference condition is adapted to receive information on measured signals received at the first mobile transceiver (210) from the base station transceiver (100) and information on measured signals received at the first mobile transceiver (210) from the relay station transceiver (200), and wherein the interference condition is determined based on the information on the measured signals.

7. The apparatus of claim 6, wherein the information on the measured signals comprises information on a path loss between the base station transceiver (100) and the first mobile transceiver (210) and/or information on a path loss between the relay station transceiver (200) and the first mobile transceiver (210).

8. The apparatus of claim 1, wherein the means for determining (12) the interference condition is adapted to classify the first mobile transceiver (210) as either being close (210b) to the relay station transceiver (200) or as being far away (210a) from the relay station transceiver (200).

9. The apparatus of claim 1, wherein the means for determining (12) is further adapted to determine the interference condition indicating that the signals from the base station transceiver (100) are degraded due to interference created by the signals from the relay station transceiver (200) by less than a predetermined threshold by determining if a transmit buffer of the relay station transceiver (200) is empty and/or wherein the means for determining (12) is further adapted to determine the interference condition indicating that the signals from the base station transceiver (100) are degraded due to interference created by the signals from the relay station transceiver (200) by less than a predetermined threshold for a radio frame in which data is transmitted from the base station transceiver (100) to the relay station transceiver (200).

10. An apparatus (20) for a relay station transceiver (200) in a mobile communication network (300), the mobile communication network (300) comprising a base station transceiver (100) and the relay station transceiver (200), the base station transceiver (100) transmitting data to the relay station transceiver (200) using a radio resource from a set of radio resources, the apparatus (20) comprising
means for buffering (22) data transmitted from the base station transceiver (100) to the relay station transceiver (200);
means for generating (24) information on a buffer status; and
means for communicating (26) the information on the buffer status to the base station transceiver (100) for enabling interference condition determination at the base station transceiver (100).

11. The apparatus of claim 10, wherein the means for communicating (26) is adapted to compose a message comprising the information on the buffer status and/or wherein the base station transceiver (100) and the relay station transceiver (200) use the same carrier frequency for data transmission to a first and a second mobile transceiver (210; 220) and/or wherein the set of radio resources corresponds to repetitive radio frames, wherein the base station transceiver (100) transmits data intermittently to the first mobile transceiver (210) using the repetitive radio frames as radio resources, wherein the relay station transceiver (200) transmits data intermittently to the second mobile transceiver (220) using the repetitive radio frames as radio resources, and wherein the base station transceiver (100) transmits data intermittently to the relay station transceiver (200) using the repetitive radio frames as radio resources.

12. The apparatus of claim 10, wherein the information on the buffer status comprises a single bit indicating whether the buffer is empty or wherein the information on the buffer status comprises a plurality of bits indicating a buffer filling state.

13. A method for a base station transceiver (100) in a mobile communication network (300), the mobile communication network (300) comprising the base station transceiver (100), a relay station transceiver (200), a first mobile transceiver (210), which is associated with the base station transceiver (100), and a second mobile transceiver (220), which is associated with the relay station transceiver (200), the relay station transceiver (200) being located in a coverage area of the base station transceiver (100), the base station transceiver (100) transmitting data to the first mobile transceiver (210) using one or more radio resources from a set of radio resources, the relay station transceiver (200) transmitting data to the second mobile transceiver (220) also using one or more radio resources from the set of radio resources, the method comprising
determining (32) an interference condition of the first mobile transceiver (210) on a radio resource used by the relay station transceiver (200) for transmission to the second mobile transceiver (220), the interference condition comprising information on a relation of signals received from the base station transceiver (100) and signals received from the relay station transceiver (200) on the radio resource by the first mobile transceiver (210); and
scheduling (34) the first mobile transceiver (210) for data transmission from the base station transceiver (100) to the first mobile transceiver (210) also using the radio resource used by the relay station transceiver (200) for transmission to the second mobile transceiver (220), when the interference condition indicates that the signals from the base station transceiver (100) are degraded due to interference created by the signals from the relay station transceiver (200) on the radio resource by less than a predetermined threshold.

14. A method for a relay station transceiver (200) in a mobile communication network (300), the mobile communication network (300) comprising a base station transceiver (100) and the relay station transceiver (200), the base station transceiver (100) transmitting data to the relay station transceiver (200) using a radio resource from a set of radio resources, the method comprising
buffering (42) data transmitted from the base station transceiver (100) to the relay station transceiver (200);
generating (44) information on a buffer status; and
communicating (46) the information on the buffer status to the base station transceiver (100) for enabling interference condition determination at the base station transceiver (100).

15. A computer program having a program code for performing one of the methods of claims 13 or 14, when the computer program is executed on a computer or processor.

## Patentansprüche

1. Vorrichtung (10) für einen Basisstations-Sender/Empfänger (100) In einem mobilen Kommunikationsnetzwerk (300), wobei das mobile Kommunikationsnetzwerk (300) einen Basisstations-Sender/Empfänger (100), einen Relaisstations-Sender/Empfänger (200), einen ersten mobilen Sender/Empfänger (210), welcher mit einem Basisstations-Sender/Empfänger (100) assoziiert ist, und einen zweiten mobilen Sender/Empfänger (220), welcher mit dem Relaisstations-Sender/Empfänger (200) assoziiert ist, umfasst, wobei der Relaisstations-Sender/Empfänger (200) In einem Abdeckungsbereich des Basisstations-Sender/Empfängers (100) angeordnet ist, wobei der Basisstations-Sender/Empfänger (100) unter Verwendung einer oder mehrerer Funkressourcen aus einem Satz von Funkressourcen Daten an den ersten mobilen Sender/Empfänger (210) überträgt, wobei der Relaisstations-Sender/Empfänger (200) ebenfalls unter Verwendung einer oder mehrerer Funkressourcen aus dem Satz von Funkressourcen Daten an den zweiten mobilen Sender/Empfänger (220) überträgt, wobei die Vorrichtung (10) umfasst:
Mittel zum Ermitteln (12) eines Interferenzzustands des ersten mobilen Sender/Empfängers (210) auf einer von dem Relaisstations-Sender/Empfänger (200) zur Übertragung an den zweiten mobilen Sender/Empfänger (220) benutzten Funkressource, wobei der Interferenzzustand Informationen über eine Relation von von dem Basisstations-Sender/Empfänger (100) empfangenen Signalen zu von dem Relaisstations-Sender/Empfänger (200) empfangenen Signalen, welche auf der Funkressource an dem ersten mobilen Sender/Empfänger (210) empfangen werden, umfasst; und
Mittel zum Planen (14) des ersten mobilen Sender/Empfängers (210) für die Übertragung von Daten von dem Basisstations-Sender/Empfänger (100) an den ersten mobilen Sender/Empfänger (210), ebenfalls unter Verwendung der von dem Releisstations-Sender/Empfänger (200) für die Übertragung an den zweiten mobilen Sender/Empfänger (220) benutzten Funkressource, wenn der Interferenzzustand anzeigt, dass die Signale von dem Basisstations-Sender/Empfänger (100) aufgrund einer durch die Signale von dem Relaisstations-Sender/Empfänger (200) auf der Funkressource erzeugten Interferenz um weniger als ein vorbestimmter Grenzwert degradiert sind.

2. Vorrichtung (10) nach Anspruch 1, wobei das Mittel zum Planen (14) weiterhin dazu ausgelegt ist, den ersten mobilen Sender/Empfänger (210) für die Übertragung von Daten von dem Basisstations-Sender/Empfänger (100) an den ersten mobilen Sender/Empfänger (210) auf einer anderen Funkressource als die Funkressource, für welche der Interferenzzustand ermittelt wurde, zu planen, wenn der Interferenzzustand anzeigt, dass die Signale von dem Basisstations-Sender/Empfänger (100) aufgrund einer durch die Signale von dem Relaisstations-Sender/Empfänger (200) auf der Funkressource erzeugten Interferenz um weniger als ein vorbestimmter Grenzwert degradiert sind.

3. Vorrichtung (10) nach Anspruch 1, wobei der Basisstations-Sender/Empfänger (100) unter Verwendung einer Funkressource aus dem Satz von Funkressourcen Daten an den Relaisstations-Sender/Empfänger (200) überträgt, und wobei das Mittel (14) zum Planen dazu ausgelegt ist, den ersten mobilen Sender/Empfänger (210) für die Übertragung von Daten von dem Basisstations-Sender/Empfänger (100) an den ersten mobilen Sender/Empfänger (210) auf einer Funkressource, auf welcher die Übertragung von dem Basisstations-Sender/Empfänger (200) unterbrochen ist, zu planen, wenn der Interferenzzustand anzeigt, dass die Signale von dem Basisstations-Sender/Empfänger (100) aufgrund einer durch die Signale von dem Relaisstations-Sender/Empfänger (200) an dem ersten mobilen Sender/Empfänger (210) auf der Funkressource erzeugten Interferenz um weniger als ein vorbestimmter Grenzwert degradiert sind.

4. Vorrichtung nach Anspruch 1, wobei der Basisstations-Sender/Empfänger (100) unter Verwendung einer Funkressource aus dem Satz von Funkressourcen Daten an den Relaisstations-Sender/Empfänger (200) überträgt, und wobei das Mittel zum Planen (14) dazu ausgelegt ist, den ersten mobilen Sender/Empfänger (210) für die Übertragung von Daten von dem Basisstations-Sender/Empfänger (100) an den ersten mobilen Sender/Empfänger (210) auf einer Funkressource, auf welcher der Basisstations-Sender/Empfänger (100) Daten an den Relaisstations-Sender/Empfänger (200) überträgt, zu planen, wenn der Interferenzzustand anzeigt, dass die Signale von dem Basisstations-Sender/Empfänger (100) aufgrund einer durch die Signale von dem Relaisstations-Sender/Empfänger (200) an dem ersten mobilen Sender/Empfänger (210) auf der Funkressource erzeugten Interferenz um weniger als ein vorbestimmter Grenzwert degradiert sind.

5. Vorrichtung nach Anspruch 1, wobei der Basisstations-Sender/Empfänger (100) und der Relaisstations-Sender/Empfänger (200) dieselbe Trägerfrequenz für die Übertragung von Daten an den ersten und an den zweiten mobilen Sender/Empfänger (210, 220) benutzen, und/oder wobei der Basisstations-Sender/Empfänger (100) die Trägerfrequenz für die Übertragung von Daten an den Relaisstations-Sender/Empfänger (200) benutzt, und/oder wobei der Satz von Funkressourcen repetitiven Funkrahmen entspricht, wobei der Basisstations-Sender/Empfänger (100) Daten periodisch unter Verwendung der repetitiven Funkrahmen als Funkressourcen an den ersten mobilen Sender/Empfänger (210) überträgt, wobei der Relaisstations-Sender/Empfänger (200) Daten periodisch unter Verwendung der repetitiven Funkrahmen als Funkressourcen an den zweiten mobilen Sender/Empfänger (220) überträgt, und wobei der Basisstations-Sender/Empfänger (100) Daten periodisch unter Verwendung der repetitiven Funkrahmen als Funkressourcen an den Relaisstations-Sender/Empfänger (200) überträgt.

6. Vorrichtung nach Anspruch 1, wobei das Mittel zum Ermitteln (12) des Interferenzzustands dazu ausgelegt ist, Informationen über an dem ersten mobilen Sender/Empfänger (210) von dem Basisstations-Sender/Empfänger (100) empfangene gemessene Signale und Informationen über an dem ersten mobilen Sender/Empfänger (210) von dem Relaisstations-Sender/Empfänger (200) empfangene gemessene Signale zu empfangen, und wobei der Interferenzzustand auf der Basis der Informationen über die gemessenen Signale ermittelt wird.

7. Vorrichtung nach Anspruch 6, wobei die Informationen über die gemessenen Signale Informationen über einen Pfadverlust zwischen dem Basisstations-Sender/Empfänger (100) und dem ersten mobilen Sender/Empfänger (210) und/oder über einen Pfadverlust zwischen dem Relaisstations-Sender/Empfänger (200) und dem ersten mobilen Sender/Empfänger (210) umfassen.

8. Vorrichtung nach Anspruch 1, wobei das Mittel zum Ermitteln (12) des Interferenzzustands dazu ausgelegt ist, den ersten mobilen Sender/Empfänger (210) entweder als nahe (210b) des Relaisstations-Sender/Empfängers (200) oder als weit entfernt (210a) von dem Relaisstations-Sender/Empfänger (200) einzuordnen.

9. Vorrichtung nach Anspruch 1, wobei das Mittel zum Ermitteln (12) weiterhin dazu ausgelegt ist, den Interferenzzustand, welcher anzeigt, dass die Signale von dem Basisstations-Sender/Empfänger (100) aufgrund einer durch die Signale von dem Relaisstations-Sender/Empfänger (200) erzeugten Interferenz um weniger als ein vorbestimmter Grenzwert degradiert sind, durch Ermitteln, ob ein Sendepuffer des Relaisstations-Sender/Empfängers (200) leer ist, zu ermitteln, und/oder wobei das Mittel zum Ermitteln (12) weiterhin dazu ausgelegt Ist, den Interferenzzustand, welcher anzeigt, dass die Signale von dem Basisstations-Sender/Empfänger (100) aufgrund einer durch die Signale von dem Relaisstations-Sender/Empfänger (200) erzeugten Interferenz um weniger als ein vorbestimmter Grenzwert degradiert sind, für einen Funkrahmen, in welchem Daten von dem Hasisstations-Sender/Empfänger (100) an den Relaisstations-Sender/Empfänger (200) übertragen werden, zu ermitteln.

10. Vorrichtung (20) für einen Relaisstations-Sender/Empfänger (200) in einem mobilen Kommunikationsnetzwerk (300), wobei das mobile Kommunikationsnetzwerk (300) einen Basisstations-Sender/Empfänger (100) und den Relaisstations-Sender/Empfänger (200) umfasst, wobei der Basisstations-Sender/Empfänger (100) unter Verwendung einer Funkressource aus einem Satz von Funkressourcen Daten an den Relaisstations-Sender/Empfänger (200) überträgt, wobei die Vorrichtung (20) umfasst:
Mittel zum Zwischenspeichern (22) von von dem Basistations-Sender/Empfänger (100) an den Relaisstations-Sender/Empfänger (200) übertragenen Daten;
Mittel zum Erzeugen (24) von Informationen über einen Pufferstatus; und
Mittel zum übermitteln (26) der Informationen über den Pufferstatus an den Basisstations-Sender/Empfänger (100), um das Ermitteln eines Interferenzzustands an dem Basisstations-Sender/Empfänger (100) zu ermöglichen.

11. Vorrichtung nach Anspruch 10, wobei das Mittel zum übermitteln (26) dazu ausgelegt ist, eine Nachricht mit den Informationen über den Pufferstatus zu verfassen, und/oder wobei der Besisstations-Sender/Empfänger (100) und der Relaisstations-Sender/Empfänger (200) dieselbe Trägerfrequenz für die Übertragung von Daten an einen ersten und einen zweiten mobilen Sender/Empfänger (210; 220) benutzen, und/oder wobei der Satz von Funkressourcen repetitiven Funkrahmen entspricht, wobei der Basisstations-Sender/Empfänger (100) Daten periodisch unter Verwendung der repetitiven Funkrahmen als Funkressourcen an den ersten mobilen Sender/Empfänger (210) überträgt, wobei der Relaisstations-Sender/Empfänger (200) Daten periodisch unter Verwendung der repetitiven Funkrahmen als Funkressourcen an den zweiten mobilen Sender/Empfänger (220) überträgt, und wobei der Basisstations-Sender/Empfänger (100) Daten periodisch unter Verwendung der repetitiven Funkrahmen als Funkressourcen an den Relaisstations-Sender/Empfänger (200) überträgt.

12. Vorrichtung nach Anspruch 10, wobei die Informationen über den Pufferstatus ein einzelnes Bit, welches anzeigt, ob der Puffer leer ist, umfassen, oder wobei die Informationen über den Pufferstatus eine Vielzahl von Bits, welche einen Pufferfülizustand anzeigen, umfassen.

13. Verfahren für einen Basisstations-Sender/Empfänger (100) in einem mobilen Kommunikationsnetzwerk (300), wobei das mobile Kommunikationsnetzwerk (300) den Basisstations-Sender/Empfänger (100), einen Relalsstations-Sender/Empfänger (200), einen ersten mobilen Sender/Empfänger (210), weicher mit einem Basisstations-Sender/Empfänger (100) assoziiert ist, und einen zweiten mobilen Sender/Empfänger (220), welcher mit dem Relaisstations-Sender/Empfänger (200) assoziiert ist, umfasst, wobei der Relaisstations-Sender/Empfänger (200) in einem Abdeckungsbereich des Basisstations-Sender/Empfängers (100) angeordnet ist, wobei der Basisstations-Sender/Empfänger (100) unter Verwendung einer oder mehrerer Funkressourcen aus einem Satz von Funkressourcen Daten an den ersten mobilen Sender/Empfänger (210) überträgt, wobei der Relaisstations-Sender/Empfänger (200) ebenfalls unter Verwendung einer oder mehrerer Funkressourcen aus dem Satz von Funkressourcen Daten an den zweiten mobilen Sender/Empfänger (220) überträgt, wobei das Verfahren umfasst:
Ermitteln (32) eines Interferenzzustands des ersten mobilen Sender/Empfängers (210) auf einer von dem Relaisstations-Sender/Empfänger (200) zur Übertragung an den zweiten mobilen Sender/Empfänger (220) benutzten Funkressource, wobei der Interferenzzustand Informationen über eine Relation von von dem Basisstations-Sender/Empfänger (100) empfangenen Signalen zu von dem Relaisstations-Sender/Empfänger (200) empfangenen Signalen, welche auf der Funkressource an dem ersten mobilen Sender/Empfänger (210) empfangen werden, umfasst; und
Planen (34) des ersten mobilen Sender/Empfängers (210) für die Übertragung von Daten von dem Basisstations-Sender/Empfänger (100) an den ersten mobilen Sender/Empfänger (210), ebenfalls unter Verwendung der von dem Relaisstations-Sender/Empfänger (200) für die Übertragung an den zweiten mobilen Sender/Empfänger (220) benutzten Funkressource, wenn der Interferenzzustand anzeigt, dass die Signale von dem Basisstations-Sender/Empfänger (100) aufgrund einer durch die Signale von dem Relaisstations-Sender/Empfänger (200) auf der Funkressource erzeugten Interferenz um weniger als ein vorbestimmter Grenzwert degradiert sind.

14. Verfahren für einen Relaisstations-Sender/Empfänger (200) in einem mobilen Kommunikationsnetzwerk (300), wobei das mobile Kommunikationsnetzwerk (300) einen Besisstations-Sender/Empfänger (100) und den Relaisstations-Sender/Empfänger (200) umfasst, wobei der Basisstations-Sender/Empfänger (100) unter Verwendung einer Funkressource aus einem Satz von Funkressourcen Daten an den Relaisstations-Sender/Empfänger (200) überträgt, wobei das Verfahren umfasst:
Zwischenspeichern (42) von von dem Basisstations-Sender/Empfänger (100) an den Relaisstations-Sender/Empfänger (200) übertragenen Daten;
Erzeugen (44) von Informationen über einen Pufferzustand; und
Übermitteln (46) der Informationen über den Pufferzustand an den Basisstations-Sender/Empfänger (100), um das Ermitteln eines Interferenzzustands an dem Basisstations-Sender/Empfänger (100) zu ermöglichen.

15. Computerprogramm mit einem Programmcode zum Durchführen eines der Verfahren gemäß den Ansprüchen 13 oder 14, wenn das Computerprogramm auf einem Computer oder einem Prozessor ausgeführt wird.

## Revendications

1. Appareil (10) pour un émetteur/récepteur de station de base (100) dans un réseau de communication mobile (300), le réseau de communication mobile (300) comprenant l'émetteur/récepteur de station de base (100), un émetteur/récepteur de station de relais (200), un premier émetteur/récepteur mobile (210), qui est associé à l'émetteur/récepteur de station de base (100), et un deuxième émetteur/récepteur mobile (220), qui est associé à l'émetteur/récepteur de station de relais (200), l'émetteur/récepteur de station de relais (200) étant situé dans une zone de couverture de l'émetteur/récepteur de station de base (100), l'émetteur/récepteur de station de base (100) émettant des données vers le premier émetteur/récepteur mobile (210) en utilisant une ou plusieurs ressources radio parmi un ensemble de ressources radio, l'émetteur/récepteur de station de relais (200) émettant des données vers le deuxième émetteur/récepteur mobile (220) en utilisant aussi une ou plusieurs ressources radio parmi ensemble de ressources radio, l'appareil (10) comprenant
un moyen pour déterminer (12) une condition d'interférence du premier émetteur/récepteur mobile (210) sur une ressource radio utilisée par l'émetteur/récepteur de station de relais (200) pour une émission vers le deuxième émetteur/récepteur mobile (220), la condition d'interférence comprenant des informations sur une relation de signaux provenant de l'émetteur/récepteur de station de base (100) et de signaux provenant de l'émetteur/récepteur de station de relais (200) sur la ressource radio par le premier émetteur/récepteur mobile (210) ; et
un moyen pour planifier (14) le premier émetteur/récepteur mobile (210) pour une émission de données à partir de l'émetteur/récepteur de station de base (100) vers le premier émetteur/récepteur mobile (210) en utilisant aussi la ressource radio utilisée par l'émetteur/récepteur de station de relais (200) pour une émission vers le deuxième émetteur/récepteur mobile (220), lorsque la condition d'interférence indique que les signaux provenant de l'émetteur/récepteur de station de base (100) sont dégradés en raison d'une interférence créée par les signaux provenant de l'émetteur/récepteur de station de relais (200) sur la ressource radio selon une valeur inférieure à un seuil prédéterminé.

2. Appareil (10) selon la revendication 1, dans lequel le moyen de planification (14) est en outre adapté pour planifier le premier émetteur/récepteur mobile (210) pour une émission de données à partir de l'émetteur/récepteur de station de base (100) vers le premier émetteur/récepteur mobile (210) sur une ressource radio différente de la ressource radio pour laquelle la condition d'interférence a été déterminée, lorsque la condition d'interférence indique que les signaux provenant de l'émetteur/récepteur de station de base (100) sont dégradés en raison d'une interférence créée par les signaux provenant de l'émetteur/récepteur de station de relais (200) sur la ressource radio selon une valeur supérieure à un autre seuil prédéterminé.

3. Appareil (10) selon la revendication 1, dans lequel l'émetteur/récepteur de station de base (100) émet des données vers l'émetteur/récepteur de station de relais (200) en utilisant une ressource radio parmi l'ensemble de ressources radio, et dans lequel le moyen (14) de planification est adapté pour planifier le premier émetteur/récepteur mobile (210) pour une émission de données à partir de l'émetteur/récepteur de station de base (100) vers le premier émetteur/récepteur mobile (210) sur une ressource radio sur laquelle l'émission, à partir de l'émetteur/récepteur de station de base (100) vers l'émetteur/récepteur de station de relais (200), est suspendue, lorsque la condition d'interférence indique que les signaux provenant de l'émetteur/récepteur de station de base (100) sont dégradés en raison d'une interférence créée par les signaux provenant de l'émetteur/récepteur de station de relais (200) au niveau du premier émetteur/récepteur mobile (210) sur la ressource radio selon une valeur inférieure au seuil prédéterminé.

4. Appareil selon la revendication 1, dans lequel l'émetteur/récepteur de station de base (100) émet des données vers l'émetteur/récepteur de station de relais (200) en utilisant une ressource radio parmi ensemble de ressources radio, et dans lequel le moyen de planification (14) est adapté pour planifier le premier émetteur/récepteur mobile (210) pour une émission de données à partir de l'émetteur/récepteur de station de base (100) vers le premier émetteur/récepteur mobile (210) sur une ressource radio sur laquelle l'émetteur/récepteur de station de base (100) émet des données vers l'émetteur/récepteur de station de relais (200), lorsque la condition d'interférence indique que les signaux provenant de l'émetteur/récepteur de station de base (100) sont dégradés en raison d'une interférence créée par les signaux provenant de l'émetteur/récepteur de station de relais (200) au niveau du premier émetteur/récepteur mobile (210) sur la ressource radio selon une valeur supérieure à un autre seuil prédéterminé.

5. Appareil selon la revendication 1, dans lequel l'émetteur/récepteur de station de base (100) et l'émetteur/récepteur de station de relais (200) utilisent la même fréquence porteuse pour une émission de données vers le premier et le deuxième émetteurs/récepteurs mobiles (210, 220) et/ou dans lequel l'émetteur/récepteur de station de base (100) utilise la fréquence porteuse pour une émission de données vers l'émetteur/récepteur de station de relais (200) et/ou dans lequel l'ensemble de ressources radio correspond à des trames radio répétitives, dans lequel l'émetteur/récepteur de station de base (100) émet des données par intermittence vers le premier émetteur/récepteur mobile (210) en utilisant les trames radio répétitives comme ressources radio, dans lequel l'émetteur/récepteur de station de relais (200) émet des données par intermittence vers le deuxième émetteur/récepteur mobile (220) en utilisant les trames radio répétitives comme ressources radio, et dans lequel l'émetteur/récepteur de station de base (100) émet des données par intermittence vers l'émetteur/récepteur de station de relais (200) en utilisant les trames radio répétitives comme ressources radio.

6. Appareil selon la revendication 1, dans lequel le moyen pour déterminer (12) la condition d'interférence est adapté pour recevoir des informations sur des signaux mesurés reçus au niveau du premier émetteur/récepteur mobile (210) provenant de l'émetteur/récepteur de station de base (100) et des informations sur des signaux mesurés reçus au niveau du premier émetteur/récepteur mobile (210) provenant de l'émetteur/récepteur de station de relais (200), et dans lequel la condition d'interférence est déterminée sur la base des informations sur les signaux mesurés.

7. Appareil selon la revendication 6, dans lequel les informations sur les signaux mesurés comprennent des informations sur un affaiblissement de propagation entre l'émetteur/récepteur de station de base (100) et le premier émetteur/récepteur mobile (210) et/ou des informations sur un affaiblissement de propagation entre l'émetteur/récepteur de station de relais (200) et le premier émetteur/récepteur mobile (210).

8. Appareil selon la revendication 1, dans lequel le moyen de détermination (12) de la condition d'interférence est adapté pour classer le premier émetteur/récepteur mobile (210) comme étant proche (210b) de l'émetteur/récepteur de station de relais (200) ou comme étant éloigné (210a) de l'émetteur/récepteur de station de relais (200).

9. Appareil selon la revendication 1, dans lequel le moyen de détermination (12) est en outre adapté pour déterminer la condition d'interférence indiquant que les signaux provenant de l'émetteur/récepteur de station de base (100) sont dégradés en raison d'une interférence créée par les signaux provenant de l'émetteur/récepteur de station de relais (200) selon une valeur inférieure à un seuil prédéterminé en déterminant si une mémoire tampon d'émission de l'émetteur/récepteur de station de relais (200) est vide et/ou dans lequel le moyen de détermination (12) est en outre adapté pour déterminer la condition d'interférence indiquant que les signaux provenant de l'émetteur/récepteur de station de base (100) sont dégradés en raison d'une interférence créée par les signaux provenant de l'émetteur/récepteur de station de relais (200) selon une valeur inférieure à un seuil prédéterminé pour une trame radio dans laquelle des données sont émises à partir de l'émetteur/récepteur de station de base (100) vers l'émetteur/récepteur de station de relais (200).

10. Appareil (20) pour un émetteur/récepteur de station de relais (200) dans un réseau de communication mobile (300), le réseau de communication mobile (300) comprenant un émetteur/récepteur de station de base (100) et l'émetteur/récepteur de station de relais (200), l'émetteur/récepteur de station de base (100) émettant des données vers l'émetteur/récepteur de station de relais (200) en utilisant une ressource radio parmi un ensemble de ressources radio, l'appareil (20) comprenant
un moyen pour mettre en mémoire tampon (22) des données émises à partir de l'émetteur/récepteur de station de base (100) vers l'émetteur/récepteur de station de relais (200) ;
un moyen pour générer (24) des informations sur un état de mémoire tampon ; et
un moyen pour communiquer (26) les informations sur l'état de mémoire tampon à l'émetteur/récepteur de station de base (100) pour permettre une détermination de condition d'interférence au niveau de l'émetteur/récepteur de station de base (100).

11. Appareil selon la revendication 10, dans lequel le moyen de communication (26) est adapté pour composer un message comprenant les informations sur l'état de mémoire tampon et/ou dans lequel l'émetteur/récepteur de station de base (100) et l'émetteur/récepteur de station de relais (200) utilisent la même fréquence porteuse pour une émission de données vers un premier et un deuxième émetteurs/récepteurs mobiles (210 ; 220) et/ou dans lequel l'ensemble de ressources radio correspond à des trames radio répétitives, dans lequel l'émetteur/récepteur de station de base (100) émet des données par intermittence vers le premier émetteur/récepteur mobile (210) en utilisant les trames radio répétitives comme ressources radio, dans lequel l'émetteur/récepteur de station de relais (200) émet des données par intermittence vers le deuxième émetteur/récepteur mobile (220) en utilisant les trames radio répétitives comme ressources radio, et dans lequel l'émetteur/récepteur de station de base (100) émet des données par intermittence vers l'émetteur/récepteur de station de relais (200) en utilisant les trames radio répétitives comme ressources radio.

12. Appareil selon la revendication 10, dans lequel les informations sur l'état de mémoire tampon comprennent un seul bit indiquant si la mémoire tampon est vide ou dans lequel les informations sur l'état de mémoire tampon comprennent une pluralité de bits indiquant un état de remplissage de la mémoire tampon.

13. Procédé pour un émetteur/récepteur de station de base (100) dans un réseau de communication mobile (300), le réseau de communication mobile (300) comprenant l'émetteur/récepteur de station de base (100), un émetteur/récepteur de station de relais (200), un premier émetteur/récepteur mobile (210), qui est associé à l'émetteur/récepteur de station de base (100), et un deuxième émetteur/récepteur mobile (220), qui est associé à l'émetteur/récepteur de station de relais (200), l'émetteur/récepteur de station de relais (200) étant situé dans une zone de couverture de l'émetteur/récepteur de station de base (100), l'émetteur/récepteur de station de base (100) émettant des données vers le premier émetteur/récepteur mobile (210) en utilisant une ou plusieurs ressources radio parmi un ensemble de ressources radio, l'émetteur/récepteur de station de relais (200) émettant des données vers le deuxième émetteur/récepteur mobile (220) en utilisant aussi une ou plusieurs ressources radio parmi l'ensemble de ressources radio, le procédé comprenant les étapes suivantes
déterminer (32) une condition d'interférence du premier émetteur/récepteur mobile (210) sur une ressource radio utilisée par l'émetteur/récepteur de station de relais (200) pour une émission vers le deuxième émetteur/récepteur mobile (220), la condition d'interférence comprenant des informations sur une relation de signaux provenant de l'émetteur/récepteur de station de base (100) et de signaux provenant de l'émetteur/récepteur de station de relais (200) sur la ressource radio par le premier émetteur/récepteur mobile (210) ; et
planifier (34) le premier émetteur/récepteur mobile (210) pour une émission de données à partir de l'émetteur/récepteur de station de base (100) vers le premier émetteur/récepteur mobile (210) en utilisant aussi la ressource radio utilisée par l'émetteur/récepteur de station de relais (200) pour une émission vers le deuxième émetteur/récepteur mobile (220), lorsque la condition d'interférence indique que les signaux provenant de l'émetteur/récepteur de station de base (100) sont dégradés en raison d'une interférence créée par les signaux provenant de l'émetteur/récepteur de station de relais (200) sur la ressource radio selon une valeur inférieure à un seuil prédéterminé.

14. Procédé pour un émetteur/récepteur de station de relais (200) dans un réseau de communication mobile (300), le réseau de communication mobile (300) comprenant un émetteur/récepteur de station de base (100) et l'émetteur/récepteur de station de relais (200), l'émetteur/récepteur de station de base (100) émettant des données vers l'émetteur/récepteur de station de relais (200) en utilisant une ressource radio parmi un ensemble de ressources radio, le procédé comprenant les étapes suivantes
mettre en mémoire tampon (42) des données émises à partir de l'émetteur/récepteur de station de base (100) vers l'émetteur/récepteur de station de relais (200) ;
générer (44) des informations sur un état de mémoire tampon ; et
communiquer (46) les informations sur l'état de mémoire tampon à l'émetteur/récepteur de station de base (100) pour permettre une détermination de condition d'interférence au niveau de l'émetteur/récepteur de station de base (100).

15. Programme informatique possédant un code de programme pour exécuter un des procédés selon la revendication 13 ou 14, lorsque le programme informatique est exécuté sur un ordinateur ou un processeur.
